Europäisches Patentamt

European Patent Office

Office européen des brevets

(11) Numéro de publication: **0 060 177**
**A1**

## (12) DEMANDE DE BREVET EUROPEEN

(21) Numéro de dépôt: **82400326.3**

(22) Date de dépôt: **24.02.82**

(51) Int. Cl.³: **E 02 B 3/22**
**B 63 B 59/02**

(30) Priorité: **27.02.81 FR 8103967**

(43) Date de publication de la demande:
**15.09.82 Bulletin 82/37**

(84) Etats contractants désignés:
**BE DE FR GB IT NL SE**

(71) Demandeur: **BERTIN & CIE**
**Boîte Postale No. 3**
**F-78370 Plaisir(FR)**

(72) Inventeur: **Bonnat, Christian Pierre**
**9, Square du Biavet**
**F-78310 Maurepas(FR)**

(74) Mandataire: **De Boisse, Louis**
**37, Avenue Franklin D. Roosevelt**
**F-75008 Paris(FR)**

(54) **Dispositif de défense pour structures en mer ou pour navires.**

(57) L'invention concerne plus particulièrement une défense d'accostage hydropneumatique constituée d'un boudin déformable (3) sensiblement vertical, muni à sa partie inférieure d'une ouverture (4) de section de passage convenablement déterminée moidre que la section moyenne de la cavité intérieure de son corps, ce boudin étant destiné à être partiellement immergé et partiellement rempli d'eau, caractérisée en ce que le boudin présente en outre, à sa partie supérieure, au moins une ouverture (5) de section de passage convenablement déterminée moindre que celle de l'ouverture prévue à la partie inférieure, pour permettre à l'air situé dans la partie supérieure du boudin de pouvoir s'échapper de façon restreinte en cas de mise en compression dudit boudin. Application notamment à la protection des ouvrages en mer.

FIG..2

EP 0 060 177 A1

Croydon Printing Company Ltd

- 1 -

**Dispositif de défense pour structures en mer ou pour navires.**

L'invention concerne un dispositif de défense pour structures en mer ou pour navires.

On connaît déjà de nombreux dispositifs de défense destinés à absorber les chocs lorsqu'un navire vient accoster un quai ou un autre navire.

En particulier, on connaît déjà par le brevet britannique 1 198 808 des défenses constituées chacune d'un boudin souple muni à sa partie inférieure d'une ouverture de section restreinte et qui, en service, flottent dans l'eau, n'étant que partiellement remplies d'eau et une poche d'air demeurant dans la partie supérieure du boudin. Ces défenses sont amarrées le long des quais, ou des navires à protéger. Lorsqu'un navire accoste, il exerce une force de compression sur la défense qui provoque une expulsion d'eau par l'ouverture prévue à la partie inférieure du boudin. Comme, toutefois, la section de cette ouverture est restreinte, cette expulsion exige un certain laps de temps, de sorte que la défense "résiste" à l'effort de compression exercé par le navire et amortit ainsi le choc. La résistance offerte par la défense varie directement avec la vitesse du navire car plus cette vitesse est élevée, plus grande est l'élévation de pression dans l'ouverture restreinte.

Ces défenses connues sont relativement satisfaisantes lorsqu'il s'agit de protéger des surfaces sensiblement planes telles qu'un mur de quai ou le flanc d'un navire, car le choc de l'accostage peut être amorti par une pluralité de défenses convenablement espacées. Toutefois, lorsqu'il s'agit de protéger une surface s'écartant notablement de la planéité, comme une surface cylindrique, les défenses sus-mentionnées ne sont plus satisfaisantes car le choc résultant de l'accostage devrait pouvoir être absorbé par une seule, voire deux défenses, ce qui conduirait à l'utilisation de défenses d'une taille considérable si on voulait les rendre capables de remplir leur rôle efficacement.

Il existe donc un besoin pour un dispositif de défense qui convienne à la protection de surfaces variées, en particulier cylindriques. Ce besoin a gagné de l'importance depuis quelques années, comme résultat de la multiplication des ouvrages en mer (dits "off-shore" en anglais). Ces ouvrages reposent généralement sur des colonnes cylindriques flottantes et reçoivent fréquemment des bateaux ravitailleurs qui viennent accoster le long desdites colonnes. Il faut donc protéger ces colonnes contre les risques d'abordage, notamment lors de l'accostage des bateaux.

Pour être utile pour la protection des colonnes cylindriques d'ouvrages en mer, il est désirable que le dispositif de défense présente les qualités suivantes :

- absorber l'énergie cinétique des bateaux avec un taux d'amortissement important;

- présenter un encombrement aussi réduit que possible afin de minimiser les efforts résultant de l'impact des vagues;

- s'adapter facilement à des surfaces non planes; et

- répartir judicieusement les efforts sur la colonne.

L'invention a pour objet de fournir une défense à performances améliorées.

L'invention a également pour objet de fournir un dispositif de défense permettant de satisfaire le besoin sus-énoncé.

Plus précisément, l'invention concerne une défense d'accostage hydropneumatique constituée d'un boudin déformable sensiblement vertical, muni à sa partie inférieure d'une ouverture de section de passage convenablement déterminée moindre que la section moyenne de la cavité intérieure de son corps, ce boudin étant destiné à être partiellement immergé et partiellement rempli d'eau, caractérisé en ce que le boudin présente en outre, à sa partie supérieure, au moins une ouverture de section de passage convenablement déterminée moindre que celle de l'ouverture prévue à la partie inférieure, pour permettre à l'air situé dans la partie supérieure du boudin de pouvoir s'échapper de façon restreinte en cas de mise en compression dudit boudin.

A titre indicatif et non limitatif, la section de passage de l'ouverture inférieure peut représenter 10 à 30% de la section moyenne de la cavité intérieure du corps du boudin tandis que la section de passage de l'ouverture supérieure peut représenter 1 à 5% environ de la section de passage de l'ouverture inférieure.

- 4 -                                      0060177

L'homme de l'art, cependant, pourra calculer dans chaque
cas les valeurs de section de passage les plus appropriées.

La défense perfectionnée selon l'invention présente
l'avantage, par rapport à la défense du brevet britannique N° 1 198 808, de pouvoir donner un meilleur amortissement des chocs. Egalement, l'ouverture supérieure
est un facteur de sécurité lorsque la défense est soumise
à de fortes pressions.

L'invention concerne aussi un dispositif de défense
constitué d'une pluralité de défenses selon l'invention
apposées le long de l'ouvrage ou du navire à protéger,
caractérisé en ce qu'il comporte, en outre, une structure
rigide disposée extérieurement aux boudins et en contact
avec ceux-ci sur au moins la majeure partie de leur hauteur et conçue pour répartir tout effort résultant d'un
accostage ou autre sur plusieurs des défenses constitutives.

Lors de l'accostage d'un navire, la structure rigide
se déplace en créant un enfoncement sur un certain nombre
de boudins. L'eau et l'air contenus dans chaque boudin sont
chassés par diminution de volume et par augmentation de
la pression d'air. Par laminage dans la ou les ouvertures
supérieures et inférieures, on obtient un amortissement
important du mouvement. Le retour du dispositif de défense
à sa position initiale, après cessation de l'effort de
compression, est assuré soit par l'élasticité propre
(raideur) des boudins, soit par un système annexe (par
exemple des lanières en caoutchouc étirées par le déplacement de la structure ou bien des plots souples comprimés par ce déplacement, ou encore par un système à
ressorts) dans le cas où l'enveloppe des boudins n'aurait
pas une raideur propre suffisante.

Le dispositif de l'invention est particulièrement utile pour la protection des colonnes cylindriques sur lesquelles reposent les ouvrages en mer. Outre la répartition de la force d'impact du navire accostant, le dispositif de l'invention a l'avantage de protéger les colonnes cylindriques de l'impact des vagues. Cependant, on pourrait l'employer aussi pour la protection de quais, de stockages flottants, ou de navires eux-mêmes. Dans le cas de la protection d'ouvrages fixes dans des mers à marées importantes, le dispositif de l'invention devra, bien entendu, être monté de façon à pouvoir suivre les fluctuations du niveau de la mer.

La forme de la structure rigide doit évidemment être adaptée à celle de l'ouvrage en mer ou du navire à protéger. Elle peut être, par exemple, cylindrique dans le cas de la protection d'une colonne, plane dans le cas d'un quai, ou galbée dans le cas d'un navire.

Bien entendu, le dispositif de défense de l'invention doit être convenablement amarré ou fixé autrement à l'ouvrage ou au navire à protéger, afin qu'il puisse remplir son rôle.

La description qui va suivre en regard des dessins annexés donnés à titre d'exemple non limitatif fera bien comprendre comment l'invention peut être réalisée, les particularités qui ressortent tant du texte que des dessins faisant bien entendu partie de ladite invention.

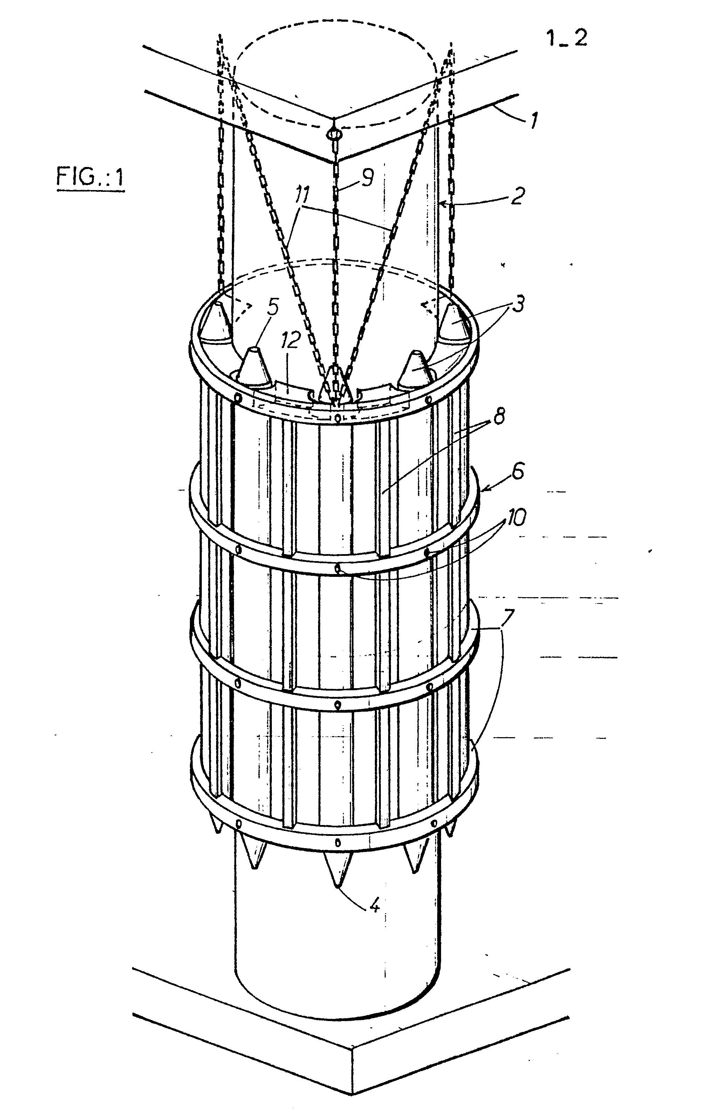

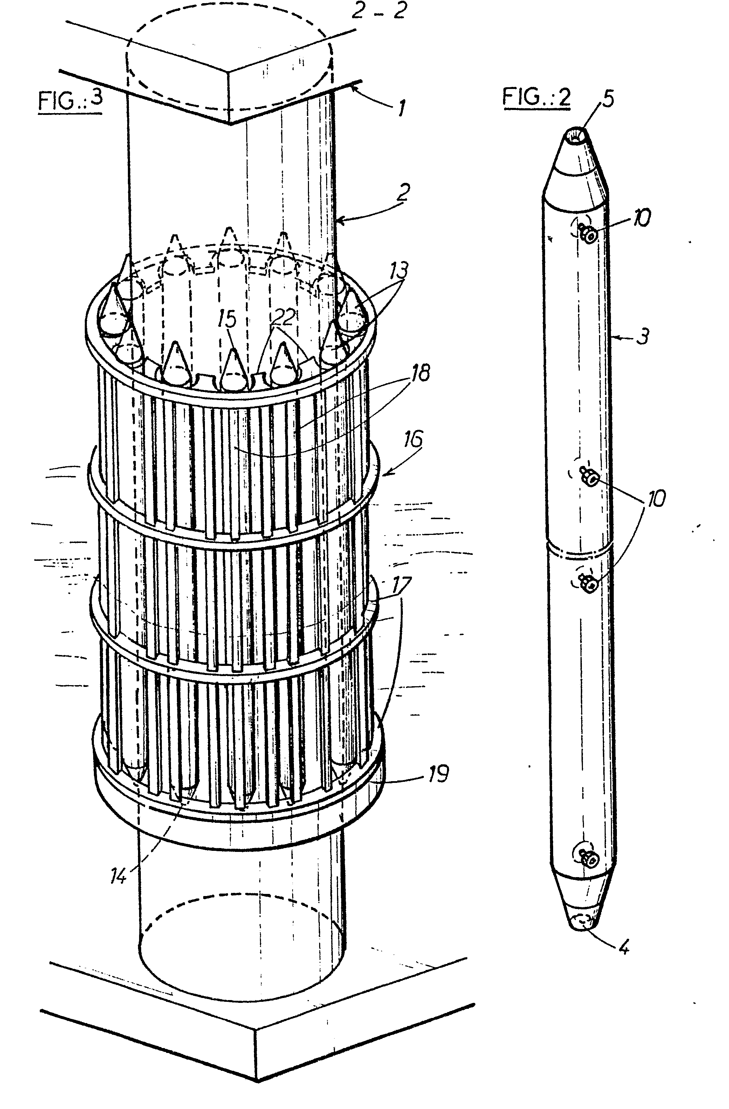

La figure 1 est une vue en perspective d'un dispositif de défense selon l'invention, appliqué à la protection d'une des colonnes cylindriques d'une plate-forme de forage en mer. La figure 2 est une vue en perspective montrant l'une des défenses constitutives. La figure 3 est une vue en perspective d'un autre mode de réalisation du dispositif
de défense de l'invention.

Sur les figures 1 et 2 on voit une plateforme 1 reposant
sur des colonnes flottantes telles que la colonne 2
qu'il s'agit de protéger. Autour de la demi-circonférence
de cette colonne tournée vers l'extérieur de la plateforme sont répartis cinq boudins ou défenses 3 partiellement immergés et partiellement remplis d'eau. Ces
boudins sont pourvus, à leurs parties inférieure et
supérieure, d'ouvertures calibrées convenablement déterminées 4 et 5, respectivement. Autour des boudins
est disposée une cage rigide 6, par exemple en bois convenablement protégé et traité, formée de cerclages 7
reliés par des montants verticaux 8. Cette cage 6 est
suspendue à des chaînes 9 fixées au sommet de la colonne
2. Les boudins 3 sont reliés aux montants 8, par exemple par le moyen de boulons 10 solidaires de l'enveloppe
des boudins, afin de maintenir leur espacement. Les
têtes des boulons sont noyées au sein des montants 8
pour ne pas risquer d'endommager les flancs du navire
venant au contact. En plus des chaînes de support 9,
des chaînes obliques 11 sont prévues pour empêcher toute
rotation intempestive, d'une amplitude significative,
du dispositif de défense autour de la colonne 2. Enfin,
des plots 12, par exemple en caoutchouc alvéolaire,
peuvent être prévus pour aider les boudins à retrouver
leur état initial après une déformation consécutive
à un accostage.

Les boudins peuvent être réalisés, par exemple en
un matériau sandwich constitué par un caoutchouc mousse
revêtu des deux côtés d'une toile en néoprène à haute
résistance mécanique.

A titre indicatif, pour un bateau accostant de 3000
tonnes, dont la vitesse d'impact au moment de l'accostage est susceptible de varier entre 0,55 et 1,50 mètre/seconde, ce qui correspond à des énergies cinétiques à dissiper comprises entre 44 et 300 T.m., on a trouvé qu'une protection satisfaisante est obtenue pour une colonne d'un diamètre de 6 à 7 mètres avec cinq boudins ou défenses de 12 m de haut et de 0,75 m de diamètre intérieur répartis sur la demi-circonférence de la colonne. Chaque boudin présente une ouverture inférieure pour l'eau d'une section de passage de 0,1 $m^2$ et une ouverture supérieure pour l'air d'une section de passage de 0,0025 $m^2$, et est immergé sur une hauteur qui peut varier entre 4 et 7 mètres environ. Chaque boudin présente une raideur de 500.000 N/m, qui constitue un bon compromis entre la capacité d'absorption d'énergie et l'aptitude du boudin à récupérer sa forme initiale après amortissement.

Ce dispositif peut absorber jusqu'à 90% de l'énergie d'accostage. En cas d'effort extrême correspondant à des énergies cinétiques de 400 à 700 T.m., le dispositif de l'invention est encore capable de protéger la colonne de dommages importants mais au prix de sa destruction. Celle-ci pourrait cependant être évitée par le montage de clapets de suppression sur chacun des boudins, disposition déjà connue, par exemple par le brevet britannique précité.

Sur la figure 3 est représenté un autre dispositif selon l'invention, également conçu pour protéger les colonnes d'une plateforme en mer. Dans ce mode de réalisation, la colonne 2 est protégée par une pluralité de boudins ou défenses 13 répartis sur toute la circonférence et entourés d'une cage rigide 16, par exemple en bois convenablement protégé et traité, formée de cerclages 17 reliés par des montants verticaux 18. Les boudins 13 sont de constitution semblable à celle des boudins 3, étant pourvus d'ouvertures calibrées inférieure et supérieure 14 et 15, respectivement. La cage 16 est montée rotative autour de la colonne. A cette fin, on peut, par exemple, la faire reposer à sa base sur une couronne 19 d'un diamètre légèrement inférieur à celui de la cage. Les boudins 13 sont maintenus espacés par des plots tels que 22, par exemple en caoutchouc alvéolaire, qui aident aussi les boudins à récupérer leur forme initiale après déformation. Les boudins peuvent soit reposer sur la couronne 19, comme représenté, soit flotter au-dessus de cette couronne. Dans le premier cas, on pourra soit utiliser une couronne 19 ajourée pour ne pas entraver l'expulsion de l'eau contenue dans les boudins lors de la déformation de ceux-ci, comme représenté, soit prévoir l'ouverture inférieure 14 sur le côté de la partie inférieure du boudin plutôt qu'orientée vers le bas. Dans la variante mettant en oeuvre des boudins flottants, la flottabilité peut être inhérente à la nature des boudins, soit résulter de corps creux fixés à ceux-ci ou logés en leur sein.

Avec le dispositif de la figure 3, lorsqu'un accostage a lieu, la cage 16 peut tourner autour de la colonne, les boudins jouant le rôle de "roulements". Un avantage de ce montage est de réduire les frottements. Un avantage supplémentaire réside dans le fait que les boudins viennent successivement coopérer à l'amortissement du choc au cours de la rotation.

Il va de soi que les modes de réalisation décrits ne sont que des exemples et qu'il serait possible de les modifier, notamment par substitution d'équivalents techniques, sans sortir pour cela du cadre de l'invention.

- 1 -

REVENDICATIONS DE BREVET

1.  Défense d'accostage hydropneumatique constituée d'un boudin déformable (3) sensiblement vertical, muni à sa partie inférieure d'une ouverture (4) de section de passage convenablement déterminée moindre que la section moyenne de la cavité intérieure de son corps, ce boudin étant destiné à être partiellement immergé et partiellement rempli d'eau, caractérisée en ce que le boudin présente en outre, à sa partie supérieure, au moins une ouverture (5) de section de passage convenablement déterminée moindre que celle de l'ouverture prévue à la partie inférieure, pour permettre à l'air situé dans la partie supérieure du boudin de pouvoir s'échapper de façon restreinte en cas de mise en compression dudit boudin.

2. Défense selon la revendication 1, caractérisée en ce que la section de l'ouverture inférieure représente 10 à 30% de la section moyenne de la cavité interne du corps du boudin.

3. Défense selon la revendication 1 ou 2, caractérisée en ce que la section de l'ouverture supérieure représente 1 à 5% environ de la section de l'ouverture inférieure.

4. Dispositif de défense constitué d'une pluralité de défenses selon l'une quelconque des revendications 1 à 3 apposées le long de l'ouvrage (2) ou du navire à protéger, caractérisé en ce qu'il comporte, en outre, une structure rigide (6) disposée extérieurement aux boudins et en contact avec ceux-ci sur au moins la majeure partie de leur hauteur et conçue pour répartir tout effort résultant d'un accostage ou autre sur plusieurs des défenses constitutives.

5. Dispositif de défense selon la revendication 4 pour la protection d'une colonne de forme générale cylindrique, caractérisé en ce que la structure rigide est formée d'une pluralité de cerclages (7) reliés par des montants verticaux (8).

6. Dispositif de défense selon la revendication 4 ou 5, caractérisé en ce que les boudins sont fixés à la structure rigide.

7. Dispositif de défense selon la revendication 5 ou 6, caractérisé en ce qu'il est monté de façon à pouvoir tourner autour de la colonne.

8. Dispositif de défense selon la revendication 5 ou 6, caractérisé en ce qu'il est monté autour de la colonne de façon à pouvoir suivre les fluctuations du niveau de la mer.

9. Dispositif de défense selon la revendication 5 ou 6, caractérisé en ce que les boudins sont répartis sur une portion seulement de la circonférence de la structure rigide.

10. Dispositif de défense selon la revendication 5, 6 ou 9, caractérisé en ce qu'il comporte des moyens de retenue (11) empêchant toute rotation intempestive d'une amplitude significative du dispositif de défense autour de la colonne.

11. Dispositif de défense selon l'une quelconque des revendications 4 à 10, caractérisé en ce qu'il comporte des plots (12) d'espacement en matière élastomère, prévus entre les défenses constitutives, qui aident les boudins à retrouver leur état initial après déformation.

0060177

1_2

FIG.:1

0060177

FIG.: 3

2 − 2

FIG.: 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A,D | GB - A - 1 198 808 (NATIONAL RE-SEARCH DEVELOPMENT CORP.)<br><br>* page 2, lignes 1-84; figures * | 1,2,3 | E 02 B 3/22<br>B 63 B 59/02 |
| A | US - A - 3 593 531 (SAADEH)<br><br>* colonne 2, lignes 11-75;colonne 3,lignes 1-25; colonne 3, lignes 44-58; figures 1-4 * | 1,2,3, 10 | |
| A | FR - A - 1 324 671 (BURLEIGH)<br><br>* page 3, colonne 1, lignes 36-57; figures 15-17 * | 4,5,6 | |
| A | FR - A - 2 358 512 (SEA TANK)<br><br>* page 2, lignes 18-40; page 3, lignes 1-35 * | 4,7 | DOMAINES TECHNIQUES RECHERCHES (Int. Cl. ³)<br><br>E 02 B<br>B 63 B<br>E 01 D<br>E 01 F |
| A | US - A - 4 072 022 (SHIMIZU)<br><br>* colonne 2, lignes 35-68; colonne 3, lignes 1-13; colonne 3, lignes 31-68; colonne 4, lignes 1-42; figures 1-3; 11-13 * | 4,7,9, 10 | |
| A | DE - B - 1 041 426 (WOLTINGER) | | |

Le present rapport de recherche a ete etabli pour toutes les revendications

| Lieu de la recherche | Date d'achevement de la recherche | Examinateur |
|---|---|---|
| La Haye | 11.06.1982 | HANNAART |